(19) Europäisches Patentamt
European Patent Office
Office européen des brevets

(11) Veröffentlichungsnummer: **0 412 937 A1**

# (12) EUROPÄISCHE PATENTANMELDUNG

(21) Anmeldenummer: **90810585.1**

(51) Int. Cl.5: **A01N 43/90**

(22) Anmeldetag: **01.08.90**

Der Anmelder hat eine Erklärung nach Regel 28 (4) EPÜ (Herausgabe einer Probe nur an einen Sachverständigen) eingereicht. Eingangsnummer(n) der Hinterlegung(en): NCIB 12411.

(30) Priorität: **10.08.89 CH 2941/89**

(43) Veröffentlichungstag der Anmeldung: **13.02.91 Patentblatt 91/07**

(84) Benannte Vertragsstaaten: **AT BE CH DE DK ES FR GB GR IT LI LU NL**

(71) Anmelder: **CIBA-GEIGY AG**
**Klybeckstrasse 141**
**CH-4002 Basel(CH)**

Anmelder: **Gesellschaft für Biotechnologische Forschung mbH (GBF)**
**Mascheroder Weg 1**
**D-3300 Braunschweig-Stöckheim(DE)**

(72) Erfinder: **Sutter, Marius, Dr.**
**Klingental 5**
**CH-4058 Basel(CH)**
Erfinder: **Pachlatko, Johannes Paul, Dr.**
**Bölchenstrasse 21**
**CH-4411 Seltisberg(CH)**
Erfinder: **Höfle, Gerhard, Prof. Dr.**
**Alter Weg 12a**
**D-3300 Braunschweig(DE)**
Erfinder: **Reichenbach, Hans, Prof. Dr.**
**Platanenstrasse 35**
**D-3340 Wolfenbüttel(DE)**

(54) **Pflanzenakarizide.**

(57) Verbindungen der Formel I

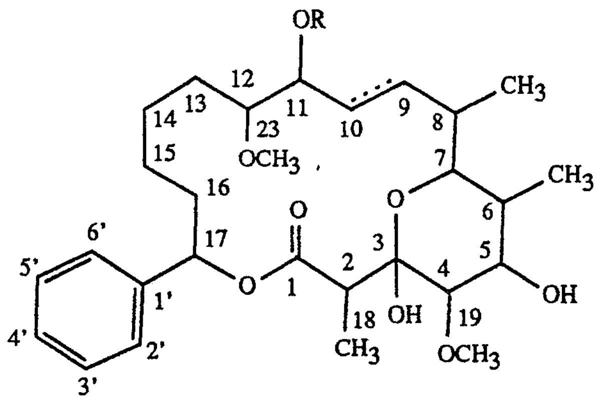

(I)

worin entweder R Methyl bedeutet und in 9,10-Stellung eine Doppelbindung ist, oder worin R Wasserstoff bedeutet und in 9,10-Stellung eine Einfachbindung ist, sind sehr wirksam gegen pflanzenschädigende Akarina.

EP 0 412 937 A1

# PFLANZENAKARIZIDE

Die vorliegende Erfindung betrifft ein Verfahren zur Bekämpfung von Pflanzenschädlingen der Ordnung Akarina. Als akarizider Wirkstoff wird dabei eine Verbindung der Formel I eingesetzt.

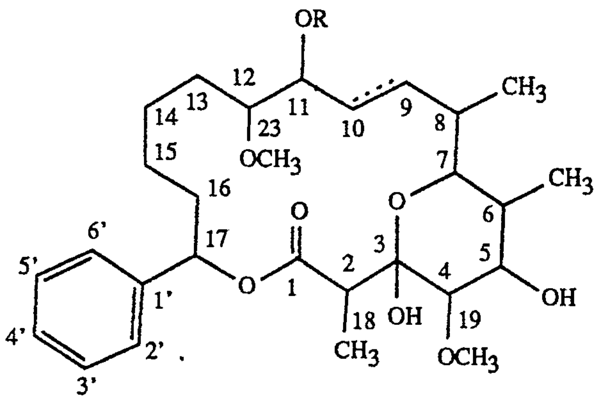

(I)

In dieser Formel bedeutet R Methyl, wenn in 9,10-Stellung eine Doppelbindung steht ( = Verbindung Ia) oder R bedeutet Wasserstoff, wenn in 9,10-Stellung eine Einfachbindung steht ( = Verbindung Ib). Hier und im folgenden soll für die Verbindung Ia auch die Bezeichnung "Soraphen A" und für Ib die Bezeichnung "Soraphen B" verwendet werden. Formel I umfasst grundsätzlich auch die isomeren Strukturen und ihre Gemische untereinander sowie ein beliebiges Gemisch aus Verbindung Ia und Ib. Soraphen A ist bevorzugt.

Die macrocyclischen Verbindungen der Formel I liegen normalerweise in der angegebenen Hemiacetalform vor, diese Form kann jedoch eine reversible Ringöffnung nach dem Schema

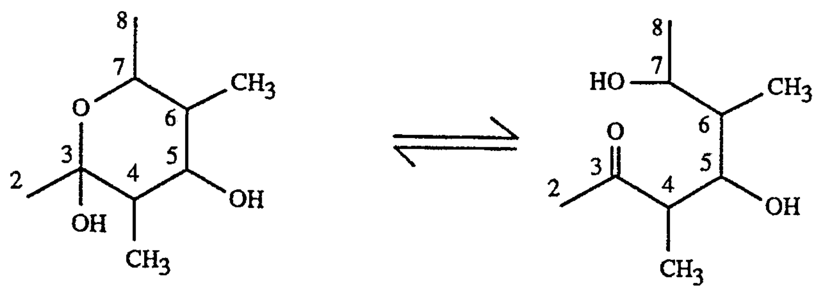

erfahren. Je nach Herstellung und nach Aufarbeitungsmethodik fallen, abhängig vom pH-Wert und vom Lösungsmittel, die Verbindungen der Formel I in der einen oder anderen Form oder als Gemisch beider Formen an. Charakteristisch für die Ringöffnung ist die Verschiebung des $^{13}C$-NMR-Signals in der 3-Position und die der $^{1}H$-NMR-Signale in bestimmten anderen Positionen. Beim Soraphen A werden beispielsweise folgende Veränderungen beobachtet: $^{13}C$-NMR($CDCL_3$, $\delta$ in ppm) 99,5→203,1 (3-C). $^{1}H$-NMR($CDCL_3$, $\delta$ in ppm) 3,14→3,72 (2-H); 3,18→4,5 (4-H); 3,83→3,16 (7-H); 5,86→5,7 (17-H). Die Formel I vorliegender Erfindung umfasst grundsätzlich die bei niedrigen pH-Werten bevorzugte 3-Hemiacetalform und die geöffnete 3-Keto-7-hydroxyform sowie alle unter die Formel I fallenden möglichen Stereoisomeren.

Die Verbindungen der Formel I sind aus der EP-A-282 455 bekannt. Die Verbindungen der Formel I werden durch mirkobiologische Kultivierung eines Sorangium (Polyangium) cellulosum-Stammes "So ce 26" gewonnen. Dieser Stamm wurde am 6. Februar 1987 bei der "National Collection of Industrial and Marine Bacteria (NCIB)", Torry Research Station, Aberdeen, Grossbritannien, unter der Nummer NCIB 12411 gemäss Budapester Vertrag hinterlegt. Sorangium cellulosum gehört zur Ordnung der Myxobacterales, Unterordnung Sorangineae, Familie Polyangiaceae.

Ueberraschenderweise wurde nun gefunden, dass die Verbindungen der Formel I ausgezeichnete Wirksamkeit als Schädlingsbekämpfungsmittel bei der Bekämpfung von Vertretern der Ordnung Akarina besitzen und sich daher insbesondere zur Bekämpfung dieser Pflanzenschädlinge eignen.

Die Verbindungen der Formel I sind vor allem wirksam gegen pflanzenschädigende Spinnmilben, beispielsweise der Familien Tetranychidae, Tarsonemidae, Eriophydae, Tyroglyphidae, Panonychidae und

Glycyphagidae. Die erfindungsgemäss verwendeten Verbindungen zeichnen sich durch gute Aktivität gegen alle Entwicklungsstadien der Akarina aus. Sie wirken gleichermassen gegen Adulte, Larven und Eier. Die Verbindungen eignen sich vor allem zur Bekämpfung der folgenden Obst-, Wein- und Gemüsekulturen, aber auch Baumwolle und Zierpflanzen befallenden Milbenspezies: Tetranychus urticae, Tetranychus cinnabarinus, Panonychus ulmi, Bryobia rubrioculus, Panonychus citri, Eriophyes pyri, Eriophyes ribis, Eriophyes vitis, Tarsonemus pallidus, Phyllocoptes vitis und Phyllocoptura oleivora.

Die gute pestizide Wirkung der erfindungsgemässen Verbindungen der Formel I entspricht einer Abtötungsrate (Mortalität) von mindestens 50-60% der erwähnten Schädlinge.

Die Wirkung der erfindungsgemässen Verbindungen und der sie enthaltenden Mittel lässt sich durch Zusatz von anderen Insektiziden und/oder Akariziden wesenltich verbreitern und an gegebene Umstände anpassen. Als Zusätze kommen zum Beispiel Vertreter der folgenden Wirkstoffklassen in Betracht: Organische Phosphorverbindungen, Nitrophenole und Derivate, Formamidine, Harnstoffe, Carbamate, Pyrethroide, chlorierte Kohlenwasserstoffe und Avermectin B- und Bacillus thuringiensis-Präparate. Typische Vertreter dieser Wirkstoffe sind:
Monocrotophos: Dimethyl-(E-1-methyl-2-methylcarbamoyl-vinyl)-phosphat,
Carbofuran: N-Methyl-2,3-dihydro-2,2-dimethylbenzofuran-7-yl-carbamat,
Tetrachlorvinphos: Dimethyl-[Z-2-chlor-2-(2,4,5-trichlorphenyl)-vinyl)-phosphat,
Malathion: 5-(1,2-Bis-äthoxycarbonyl-äthyl)-O,O-dimethyl-dithiophosphat,
Parathion-methyl: O,O-Dimethyl-O-(4-nitrophenyl)-thiophosphat,
Carbaryl: N-Methyl-1-naphthyl-carbamat,
Methomyl: S-Methyl-N-methylcarbamoyloxy-thioacetimidat,
Chlordimeform: N′-(4-Chlor-2-methylphenyl)-N,N-dimethylformamidin,
Diazinon: O,O-Diäthyl-O-(2-isopropyl-4-methyl-pmmidin-6-yl)-thiophosphat,
Camphechlor: Oktachlorocamphen,
EPN: O-Aethyl-O-(4-nitrophenyl)-phenylthiophosphonat,
Deltamethrin: (1R,3R)3-(2,2-Dibromvinyl)-2,2-dimethylcyclopropancarbonsäure-(S)-α-cyano-3-phenoxybenzylester,
Oxamyl: N,N-Dimethyl-α-methylcarbamoyloxyimino-α-methylthio-acetamid,
Fenvalerate: (RS)-2-(4-Chlorphenyl)-3-methylbuttersäure-(RS)-α-cyano-3-phenoxybenzylester,
Permethrin: (1RS,3RS; 1RS,3SR)-3-(2,2-Dichlorvinyl)-2,2-dimethylcyclopropancarbonsäure-3-phenoxybenzylester,
Cypermethrin: (1RS,3RS; 1RS,3SR)-3-(2,2-Dichlorvinyl)-2,2-dimethylcyclopropan carbonsäure-(RS)-α-cyano-3-phenoxybenzylester,
Profenofos: O-Aethyl-O-(4-brom-2-chlorphenyl)-S-propyl-thiophosphat,
Sulfprofos: O-Aethyl-O-(4-methylthio-phenyl)-S-propyl-dithiophosphat,
Triflumuron: N-(4-Trifluormethoxyphenyl)-N′-(2-chlorbenzoyl)-harnstoff,
Diflubenzuron: N-(4-Chlorphenyl)-N′-(2,6-difluorbenzoyl)-harnstoff,
Methoprene: (E,E)-(RS)-11-Methoxy-3,7,11-trimethyl-dodecyl-2,4-dienoyl-isopropylester,
Buprofezine: 2-tert.Butylimino-3-isopropyl-5-phenyl-1,3,5-thiadiazinan-4-on,
Thiodicarb:3,7,9,13-Tetramethyl-5,11,dioxa-2,8,14-trithia-4,7,9,12-tetraazapentedeca-3,12-dien-6,10-dion,
Acephate: N-[Methoxy-(methylthio)-phosphinoyl]-acetamid,
Azinphos-methyl: S-(2,5-Dihydro-4-oxo-1,2,3-benzotriazin-3-ylmethyl)-O,O-dimethyldithiophosphat,
Chlorpyrifos: O,O-Diäthyl-O-(3,5,6-trichlorpyrid-2-yl)-thiophosphat,
Dimethoate: O,O-Dimethyl-S-methylcarbamoylmethyl-dithiophosphat,
Fonophos: O-Aethyl-S-phenyl-(RS)-äthandithiophosphonat,
Isofenphos: O-[Aethoxy-(isopropylamino)-phosphinothioyl]-salicylsäure-isopropylester,
Methidathion: S-(2,3-Dihydro-5-methoxy-2-oxo-1,3,4-thiadiazol-3-ylmethyl)-O,O-dimethyl-dithiophosphat,
Methamidiphos: O,S-Dimethyl-phosphoramidothioat,
Monocrotophos: (E)-(1-Methyl-2-methylcarbamoyl-vinyl)-dimethyl-phosphat,
Phosmet: O,O-Dimethyl-S-phthalimidomethyldithiophosphat,
Phosphamidon: (2-Chlor-2-diäthylcarbamoyl-1-methyl-vinyl)-dimethylphosphat, Phosalone: O,O-Diäthyl-S-(6-chlor-2,3-dihydro-2-oxo-1,3-benzoxazol-3-ylmethyl)-dithiophosphat,
Pirimicarb: O-(2-Dimethylamino-5,6-dimethylpyrimidin-4-yl)-dimethyl-carbamat,
Phorate: S-Aethylthiomethyl-O,O-diäthyldithiophosphat,
Terbufos: S-tert.Butylthiomethyl-O,O-diäthyldithiophosphat,
Trichlorfon: O,O-Dimethyl-2,2,2-trichlor-1-hydroxyl-äthylphosphonat,
Methoxychlor: 1,1,1-Trichlor-2,2-bis(4-methoxyphenyl)-äthan,
Bifenthrin: (Z)-(IRS,3RS)-3-(2-Chlor-3,3,3-trifluorprop-1-enyl)-2,2-dimethylcyclopropancarbonsäure-2-methyl-3-phenylbenzylester,
Cyfluthrin: (1RS,3RS; 1RS,3SR)-3-(2,2-Dichlorvinyl)-2,2-dimethylcyclopropancarbonsäure-(RS)-α-cyano-4-fluor-3-phenoxybenzylester,
Fenpropathrin: 2,2,3,3-Tetramethylcyclopropancarbonsäure-(RS)-α-cyano-3-phenoxybenzylester,
Fluvalinate: N-(2-Chlor-4-trifluormethylphenyl)-valyl-(RS)-α-cyano-3-phenoxybenzylester,
Flucythrinate: (S)-2-(4-Difluormethoxyphenyl)-2-methyl-buttersäure-(RS)-α-cyano-3-phenoxybenzylester,
Tralomethrin: (1RS,3S)-2,2-Dimethyl-3-[(RS)-1,2,2,2-tetrabromäthyl]-cyclopropancarbonsäure-(S)-α-cyano-3-phenoxybenzylester,
Bifenate: (Z)-(IRS,3RS)-3-(2-Chlor-3,3,3-trifluorprop-1-enyl)-2,2-dimethylcyclopropancarbonsäure-2-methyl-3-phenyl-benzylester,
Metaldehyde: 2,4,6,8-Tetramethyl-1,3,5,7-tetraoxocyclooktan,
Rotenone: (2R,6aS,12aS)-1,2,6,6a,12,12a-Hexahydro-2-isopropenyl-8,9-dimethoxychromeno[3,4-b]furo[2,3-h]chromen-6-on,
Binapacryl: 3-Methylcrotonsäure-2-sec.butyl-4,6-dinitrophenylester,
Quinomethionate: 6-Methyl-1,3-dithiolo[4,5-]quinoxalin-2-on,
Chlorobenzilate:4,4′-Dichlorbenzilsäure-äthylester,
Dicofol: 2,2,2-Trichlor-1,1-bis(4-chlorphenyl)-äthanol,
Dienochlor: Perchlor-1,1′-bicyclopenta-2,4-dien,
Bisclofentezin: 3,6-Bis(2-chlorphenyl)-1,2,4,5-tetrazin,
Cyhexatin: Tricyclohexyl-hydroxystannan,
Hexythiazox: (4RS,5RS)-5-(4-Chlorphenyl)-4-methyl-2-oxo-1,3-thiazolidin-3-carbonsäure-cyclohexylamid,
Amitraz: N,N-Bis(2,4-xylyliminomethyl)-methylamin,
Propargite: 2-(4-tert.Butylphenoxy)-cyclohexyl-propargylsulfit,
Fenbutatin-oxide: Hexakis-(2-methyl-2-phenylpropyl)-distannanoxan.

Die Verbindungen der Formel I werden in unveränderter Form, das heisst als reine kristalline Substanz oder als aus der Fermentation gewonnene getrocknete und gemahlene Biomasse, oder vorzugsweise zusammen mit den in der Formulierungstechnik üblichen Hilfsmitteln eingesetzt und können daher beispielsweise zu Emulsionskonzentraten, direkt versprüh- oder verdünnbaren Lösungen, verdünnten Emulsionen, Spritzpulvern, löslichen Pulvern, Stäubemitteln, Granulaten, auch Verkapselungen in polaren Stoffen in bekannter Weise verarbeitet werden. Die Anwendungsverfahren, wie Versprühen, Vernebeln, Verstäuben, Verstreuen oder Giessen, werden ebenso wie die Mittel den angestrebten Zielen und den gegebenen Verhältnissen entsprechend gewählt.

Die Formulierung, das heisst die den Wirkstoff der Formel I, beziehungsweise Kombinationen dieser Wirkstoffe mit anderen Insektiziden oder Akariziden, und gegebenenfalls einen festen oder flüssigen Zusatzstoff enthaltenden Mittel, Zubereitungen oder Zusammensetzungen, werden in bekannter Weise hergestellt, zum Beispiel durch inniges Vermischen und/oder Vermahlen der Wirkstoffe mit Streckmitteln, wie beispielsweise mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie Xylolgemische oder substituierte Naphthaline, Phthalsäureester, wie Dibutyl- oder Dioktylphthalat, aliphatische Kohlenwasserstoffe, wie Cyclohexan, Paraffine, Alkohole und Glykole sowie deren Aether und Ester, wie Aethanol, Aethylenglykol, Aethylenglykolmonomethyl- oder -äthyläther, Ketone, wie Cyclohexanon, stark polare Lösungsmittel, wie N-Methyl-2-pyrrolidon, Dimethylsulfoxid oder Dimethylformamid, sowie gegebenenfalls epoxidierte Pflanzenöle, wie epoxidiertes Kokosnussöl oder Sojaöl, oder Wasser.

Als feste Trägerstoffe, beispielsweise für Stäubemittel und dispergierbare Pulver, werden in der Regel natürliche Gesteinsmehle verwendet, wie Calcit, Talküm, Kaolin, Montmorillonit oder Attapulgit. Zur Verbesserung der physikalischen Eigenschafien können auch hochdisperse Kieselsäuren oder hochdisperse saugfähige Polymerisate zugesetzt werden. Als gekörnte, adsorptive Granulatträger kommen poröse Typen, wie Bimsstein, Ziegelbruch, Sepiolit oder Bentonit, als nicht sorptive Trägermaterialien Calcit oder Sand in Frage. Darüberhinaus kann eine Vielzahl von granulierten Materialien anorganischer oder organischer Natur, wie insbesondere Dolomit oder zerkleinerte Pflanzenrückstände, verwendet werden.

Als oberflächenaktive Verbindungen kommen je nach Art des zu formulierenden Wirkstoffes der Formel I oder der Kombinationen dieser Wirkstoffe mit andern Insektiziden oder Akariziden nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen als auch wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie die Natrium- oder Kalium-Salze der Oel- oder Stearinsäure, oder von natürlichen Fettsäuregemischen, die beispielsweise aus Kokosnuss- oder Tallöl gewonnen werden können. Ferner sind als Tenside auch die Fettsäure-methyl-taurin-salze sowie modifizierte und nicht modifizierte Phospholipide zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen im allgemeinen einen Alkylrest mit 8 bis 22 C-Atomen auf, wobei Alkyl auch den Alkylteil von Acylresten einschliesst, beispielsweise das Natrium- oder Calcium-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit etwa 8-22 C-Atomen. Alkylarylsulfonate sind zum Beispiel die Natrium-, Calcium- oder Triäthanolaminsalze der Dodecyl- benzolsulfonsäure, der Dibutylnaphthalinsulfonsäure oder eines Naphthalinsulfonsäure-Formaldehydkondensationsproduktes. Ferner kommen auch entsprechende Phosphate, wie zum Beispiel Salze des Phosphorsäureesters eines p-Nonylphenol-(4-14)-Aethylenoxid-Adduktes, in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkyl- phenole enthalten können. Weiterhin geeignete nichtionische Tenside sind die wasserlöslichen 20 bis 250 Aethylenglykoläthergruppen und 10 bis 100 Propylenglykoläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykol-Einheiten.

Als Beispiele nichtionischer Tenside seien Nonylphenolpolyäthoxyäthanole, Ricinusölpolyglykoläther, Ricinusölthioxilat, Polypropylen-Polyäthylenoxid-Addukte, Tributylphenoxypolyäthoxyäthanol, Polyäthylenglykol und Octylphenoxypolyäthoxyäthanol erwähnt. Ferner kommen auch Fettsäureester von Polyoxyäthylensorbitan, wie das Polyoxyäthylensorbitan-trioleat in Betracht.

Bei den kationischen Tensiden handelt es sich vor allem um quarternäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, beispielsweise das Stearyltrimethylammoniumchlorid oder das Benzyl-di-(2-chloräthyl)-äthylammoniumbromid.

Die in der Formulierungstechnik gebräuchlichen Tenside sind u.a. in folgenden Publikationen beschrieben:

"1985 International Mc Cutcheon's Emulsifiers & Detergents", Glen Rock NJ USA, 1985",
H. Stache, "Tensid-Taschenbuch", 2. Aufl., C. Hanser Verlag München, Wien 1981,
M. and J. Ash. "Encyclopedia of Surfactants", Vol. I-III, Chemical Publishing Co., New York, 1980-1981.

Die pestiziden Zubereitungen enthalten in der Regel 0,1 bis 99 %, insbesondere 0,1 bis 95 % Wirkstoff der Formel I oder Kombinationen dieses Wirkstoffs mit andern Insektiziden oder Akariziden, 1 bis 99,9 % eines festen oder flüssigen Zusatzstoffes und 0 bis 25 %, insbesondere 0,1 bis 20 %, eines Tensides. Während als Handelsware eher konzentrierte Mittel bevorzugt werden, verwendet der Endverbraucher in der Regel verdünnte Zubereitungen, die wesentlich geringere Wirkstoffkonzentrationen aufweisen. Typische Anwendungskonzentrationen liegen zwischen 0,1 und 1000 ppm, vorzugsweise zwischen 0,1 und 500 ppm. Die Aufwandmengen pro Hektar betragen im allgemeinen 1 bis 1000 g Wirkstoff pro Hektar, vorzugsweise 1 bis 100 g/ha.

Insbesondere setzen sich bevorzugte Formulierungen folgendermassen zusammen:
(% = Gewichtsprozent)

Emulgierbare Konzentrate

Aktiver Wirkstoff: 1 bis 20%, bevorzugt 5 bis 10 %
oberflächenaktives Mittel: 5 bis 30 %, vorzugsweise 10 bis 20 %
flüssiges Trägermittel: 50 bis 94 %, vorzugsweise 70 bis 85 %

Stäube:

Aktiver Wirkstoff: 0,1 bis 10 %, vorzugsweise 0,1 bis 1 %
festes Trägermittel: 99,9 bis 90 %, vorzugsweise 99,9 bis 99 %

Suspension-Konzentrate

Aktiver Wirkstoff: 5 bis 75 %, vorzugsweise 10 bis 50 %
Wasser: 94 bis 24 %, vorzugsweise 88 bis 30 %
oberflächenaktives Mittel: 1 bis 40 %, vorzugsweise 2 bis 30 %

Benetzbare Pulver

Aktiver Wirkstoff: 0,5 bis 90 %, vorzugsweise 1 bis 80 %
oberflächenaktives Mittel: 0,5 bis 20 %, vorzugsweise 1 bis 15 %
festes Trägermaterial: 5 bis 95 %, vorzugsweise 15 bis 90 %

Granulate

aktiver Wirkstoff: 0,5 bis 30 %, vorzugsweise 3 bis 15 %
festes Trägermittel: 99,5 bis 70 %, vorzugsweise 97 bis 85 %

Die Mittel können auch weitere Zusätze wie Stabilisatoren, Entschäumer, Konservierungmittel, Viskositätsregulatoren, Bindemittel, Haftmittel sowie Dünger oder andere Wirkstoffe zur Erzielung spezieller Effekte enthalten.

Die folgenden Beispiele dienen der Erläuterung der Erfindung. Sie schränken die Erfindung nicht ein.

Formulierungsbeispiele für den Wirkstoff der Formel I (% = Gewichtsprozent)

| 1. Emulsions-Konzentrate | a) | b) | c) |
|---|---|---|---|
| Wirkstoff Ia oder Ib | 25 % | 40 % | 50 % |
| Ca-Dodecylbenzolsulfonat | 5 % | 8 % | 6 % |
| Ricinusöl-polyäthylenglykoläther (36 Mol Aethylenoxid) | 5 % | - | - |
| Tributylphenol-polyäthylenglykoläther (30 Mol Aethylenoxid) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 2. Lösungen | a) | b) | c) | d) |
|---|---|---|---|---|
| Wirkstoff Ia oder Ib | 80 % | 10 % | 5 % | 95 % |
| Aethylenglykol-monomethyl-äther | 20 % | - | - | - |
| Polyäthylenglykol MG 400 | - | 70 % | - | - |
| N-Methyl-2-pyrrolidon | - | 20 % | - | - |
| Epoxydiertes Kokosnussöl | - | - | 1 % | 5 % |
| Benzin (Siedegrenzen 160-190° C) | - | - | 94 % | - |
| (MG = Molekulargewicht) | | | | |

Die Lösungen sind zur Anwendung in Form kleinster Tropfen geeignet.

| 3. Granulate | a) | b) |
|---|---|---|
| Wirkstoff Ia oder Ib | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 4. Stäubemittel | a) | b) |
|---|---|---|
| Wirkstoff Ia oder Ib | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel. Diese lassen sich durch weiteren Zusatz der drei Trägerstoffe auf anwendungsfertige Stäube mit 0,001 % Wirkstoff vermahlen.

| 5. Spritzpulver | a) | b) | c) |
|---|---|---|---|
| Wirkstoff Ia oder Ib | 25 % | 50 % | 75 % |
| Na-Ligninsulfonat | 5 % | 5 % | - % |
| Na-Laurylsulfat | 3 % | - | 5% |
| Na-Diisobutylnaphthalinsulfonat | - | 6 % | 10 % |
| Oktylphenolpolyäthylenglykoläther (7-8 Mol Aethylenoxid) | - | 2 % | - % |
| Hochdisperse Kieselsäure | 5 % | 10 % | 10 % |
| Kaolin | 62% | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 6. Umhüllungs-Granulat | |
|---|---|
| Wirkstoff Ia oder Ib | 3 % |
| Polyäthylenglykol (MG 200) | 3 % |
| Kaolin | 94 % |
| (MG = Molekulargewicht) | |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

| 7. Suspensions-Konzentrat | |
|---|---|
| Wirkstoff Ia oder Ib | 40 % |
| Aethylenglykol | 10 % |
| Nonylphenolpolyäthylenglykoläther (15 Mol Aethylenoxid) | 6 % |
| Na-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

8. Biomasse-Konzentrat

Die aus der Produktionskultur anfallende Biomasse wird getrocknet, vermahlen und im Gewichtsverhältnis 80:20 mit Aethylenglykol-monomethyl-äther gemischt. Ein solches Konzentrat lässt sich beliebig mit Wasser zu Sprühsuspensionen verdünnen.

## Biologische Beispiele

### Beispiel 1: Wirkung gegen Tetranychus urticae

Junge Bohnenpflanzen werden mit einer Mischpopulation von Tetranychus urticae besiedelt und 1 Tag später mit einer wässrigen Emulsions-Spritzbrühe, die 400 oder 200 ppm des Wirkstoffes enthält, besprüht. Die Pflanzen werden anschliessend für 6 Tage bei 25 °C inkubiert und danach ausgewertet. Aus dem Vergleich der Anzahl toter Eier, Larven und Adulten auf behandelten zu denjenigen auf den unbehandelten Pflanzen wird die prozentuale Reduktion der Population (% Wirkung) bestimmt.

Die Verbindungen Ia und Ib zeigen bei 400 und 200 ppm eine 100%ige Wirkung gegen Adulte, Larven und Eier von Tetranychus urticae in diesem Test.

### Beispiel 2: Wirkung gegen Panonychus ulmi (OP und Carb. resistent)

Apfelsämlinge werden mit adulten Weibchen von Panonychus ulmi besiedelt. Nach sieben Tagen werden die infizierten Pflanzen mit einer wässrigen Emulsion-Spritzbrühe, enthaltend 100 oder 50 ppm der zu prüfenden Verbindung, bis zur Tropfnässe besprüht und im Gewächshaus kultiviert. Nach 14 Tagen erfolgt die Auswertung. Aus dem Vergleich der Anzahl toter Spinnmilben auf den behandelten zu denjenigen auf den unbehandelten Pflanzen wird die prozentuale Reduktion an Population (% Wirkung) bestimmt.

Die Verbindungen Ia und Ib zeigen bei 100 und bei 50 ppm eine 100%ige Wirkung gegen Adulte, Larven und Eier von Panonychus ulmi in diesem Test.

### Beispiel 3: Wirkung gegen Tetranychus cinnabarinus

Junge Bohnenpflanzen werden mit einer Mischpopulation von Tetranychus cinnabarinus besiedelt und 1 Tag später mit einer wässrigen Emulsions-Spritzbrühe, die 200 ppm des Wirkstoffes enthält, besprüht. Die Pflanzen werden anschliessend für 9 Tage bei 25 °C inkubiert und danach ausgewertet. Aus dem Vergleich der Anzahl toter Eier, Larven und Adulten auf behandelten zu denjenigen auf den unbehandelten Pflanzen wird die prozentuale Reduktion der Population (% Wirkung) bestimmt.

Die Verbindungen Ia und Ib zeigen eine 100%ige Wirkung gegen Adulte und Larven von Tetranychus cinnabarinus in diesem Test. Gegen Eier wird eine Wirkung über 90 % erzielt.

## Ansprüche

1. Verfahren zur Bekämpfung von Pflanzenschädlingen der Ordnung Akarina, dadurch gekennzeichnet, dass man die Pflanzen oder den Lebensraum der Schädlinge mit einer wirksamen Menge eines Wirkstoffes der Formel I

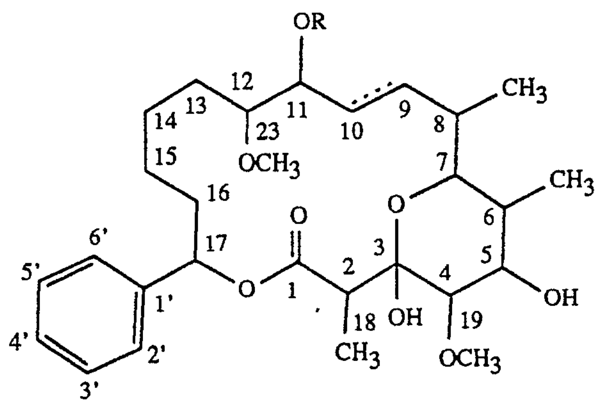

(I)

worin entweder R Methyl bedeutet und in 9,10-Stellung eine Doppelbindung ist, oder worin R Wasserstoff bedeutet und in 9,10-Stellung eine Einfachbindung ist, behandelt.

2. Verfahren gemäss Anspruch 1, dadurch gekennzeichnet, dass als Wirkstoff die Verbindung der Formel Ia

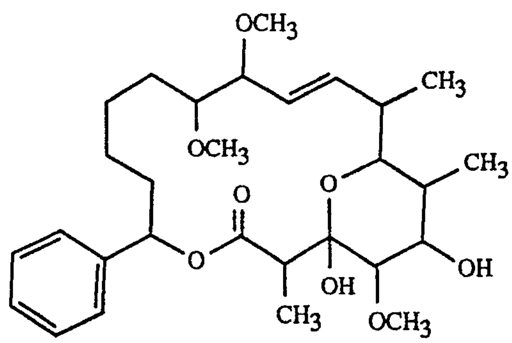

(Ia).

verwendet wird.

3. Verfahren gemäss Anspruch 1 zur Bekämpfung der Spinnmilbenfamilien Tetranychidae und Panonychidae.

4. Verfahren gemäss Anspruch 1 zur Bekämpfung von Tetranychus urticae, Tetranychus cinnabarinus und Panonychus ulmi.

5. Verwendung einer Verbindung der Formel I gemäss Anspruch 1 zur Bekämpfung von Pflanzenschädlingen der Ordnung Akarina.

6. Insektizides und akarizides Schädlingsbekämpfungsmittel, dadurch gekennzeichnet, dass es neben einem Wirkstoff der Formel I gemäss Anspruch 1, mindestens einen weiteren Wirkstoff ausgewählt aus der Reihe Monocrotophos, Carbofuran, Tetrachlorvinphos, Malathion, Parathion-methyl, Carbaryl, Methomyl, Chlordimeform, Diazinon, Camphechlor, EPN, Deltamethrin, Oxamyl, Fenvalerate, Permethrin, Cypermethrin, Profenofos, Sulprofos, Triflumuron, Diflubenzuron, Methoprene, Buprofezine, Thiodicarb, Acephate, Azinphos-methyl, Chlorpyrifos, Dimethoate, Fonophos, Isofenphos, Methidathion, Metharnidiphos, Monocrotophos, Phosmet, Phosphamidon, Phosalone, Pirimicarb, Phorate, Terbufos, Trichlorfon, Methoxychlor, Bifenthrin, Cyfluthrin, Fenpropathrin, Fluvalinate, Flucythrinate, Tralomethrin, Bifenate, Metaldehyde, Rotenone, Binapacryl, Quinomethionate, Chlorobenzilate, Dicofol, Dienochlor, Bisclofentezin, Cyhexatin, Hexythiazox, Amitraz, Propargite und Fenbutatin-oxide, enthält.

7. Mittel gemäss Anspruch 6, dadurch gekennzeichnet, dass es neben der Kombination von Aktivstoffen mindestens einen Trägerstoff enthält.

Europäisches Patentamt

# EUROPÄISCHER RECHERCHENBERICHT

Nummer der Anmeldung

**EP 90 81 0585**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 282 455 (CIBA-GEIGY AG)<br>- - - - - | | A 01 N 43/90 |
| | | | RECHERCHIERTE SACHGEBIETE (Int. Cl.5) |
| | | | A 01 N |

Der vorliegende Recherchenbericht wurde für alle Patentansprüche erstellt

| Recherchenort | Abschlußdatum der Recherche | Prüfer |
|---|---|---|
| Den Haag | 09 November 90 | DONOVAN T.M. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument